# EUROPEAN PATENT APPLICATION

(11) **EP 4 804 684 A1**
(43) Date of publication of application: **09.09.2026**
(21) Application number: 23957682.0
(22) Date of filing: 02.11.2023
(51) Int. Cl.: H04W 72/21, H04W 64/00

(54) **TERMINAL, BASE STATION, AND COMMUNICATION METHOD**

(71) Applicant: NTT DOCOMO, INC., Tokyo 100-6150 (JP)
(72) Inventor: SHIMA, Kousuke, Tokyo 100-6150 (JP); TAKEDA, Daiki, Tokyo 100-6150 (JP); OKAMURA, Masaya, Tokyo 100-6150 (JP); HARADA, Hiroki, Tokyo 100-6150 (JP); ECHIGO, Haruhi, Tokyo 100-6150 (JP)
(74) Representative: Hoffmann Eitle
(86) International application number: PCT/JP2023/039620
(87) International publication number: WO 2025/094356

(57) **Abstract**

A terminal includes: a transmission unit configured, when a positioning reference signal and a measurement reference signal collide, to drop the positioning reference signal and transmit the measurement reference signal to a network; and a control unit configured to assume that positioning is performed by the measurement reference signal.

## Description

### Technical Field

The present invention relates to a positioning technique in a radio communication system.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been developed. In 5G, various radio technologies have been studied in order to satisfy the requirement that the delay in the radio section be less than or equal to 1 ms while achieving a throughput greater than or equal to 10 Gbps.

Further, NR Positioning, in which positioning is performed using a reference signal (RS: Reference Signal), is under study. In conventional NR Positioning, for example, measurements for positioning are performed using a reference signal defined for positioning, such as SRS for positioning (see Non-Patent Literatures 1 and 2).

### Citation List

### Non-Patent Literature

[Non-Patent Literature 1] 3GPP TS 38.331 V17.4.0 (2023-03)
[Non-Patent Literature 2] 3GPP TS 37.355 V17.5.0 (2023-06)

### Summary of Invention

### Technical Problem

In Rel-18 NR positioning, frequency hopping of SRS for RedCap UEs is under discussion. When frequency hopping is applied to SRS for positioning and the like, it is expected that opportunities for collisions between SRS for positioning and another signal/channel will increase. However, in the conventional techniques, operations of a terminal and an NW (network) in the event of a collision between SRS for positioning and another signal/channel are not clearly defined.

Therefore, operations in the event of a collision between SRS for positioning and another signal/channel may not be performed appropriately and, as a result, positioning or a desired measurement may not be performed appropriately.

The present invention has been made in view of the above, and an object of the present invention is to provide a technique that makes it possible for a terminal or an NW to appropriately perform operations when a collision occurs between SRS for positioning and another signal/channel. Solution to Problem

According to the disclosed technique, there is provided a terminal including:
a transmission unit configured, when a positioning reference signal and a measurement reference signal collide, to drop the positioning reference signal and transmit the measurement reference signal to a network; and
a control unit configured to assume that positioning is performed by the measurement reference signal.

### Advantageous Effects of Invention

According to the disclosed technology, a technique is provided that makes it possible for a terminal or an NW, when a collision occurs between SRS for positioning and another signal/channel, to appropriately perform operations.

### Brief Description of Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing a configuration in which a plurality of base stations exist;
[Fig. 4] FIG. 4 is a diagram for explaining a basic operation;
[Fig. 5] FIG. 5 is a diagram for explaining Embodiments 1 and 2;
[Fig. 6] FIG. 6 is a diagram for explaining whether positioning can be performed in the event of a collision;
[Fig. 7] FIG. 7 is a diagram for explaining whether positioning can be performed in the event of a collision;
[Fig. 8] FIG. 8 is a diagram for explaining whether positioning can be performed in the event of a collision;
[Fig. 9] FIG. 9 is a diagram for explaining whether positioning can be performed in the event of a collision;
[Fig. 10] FIG. 10 is a diagram for explaining Embodiment 3;
[Fig. 11] FIG. 11 is a diagram for explaining Embodiment 3;
[Fig. 12] FIG. 12 is a diagram showing an example of a functional configuration of a base station 10 and an LMF 30 according to an embodiment of the present invention;
[Fig. 13] FIG. 13 is a diagram showing an example of a functional configuration of a terminal 20 according to an embodiment of the present invention;
[Fig. 14] FIG. 14 is a diagram showing an example of a hardware configuration of the base station 10, the terminal 20, or the LMF 30 according to an embodiment of the present invention; and
[Fig. 15] FIG. 15 is a diagram showing an example of a vehicle.

### Description of Embodiments

Hereinafter, embodiments of the present invention will be described with reference to the drawings. It should be noted that the embodiments described below are merely examples, and embodiments to which the present invention is applied are not limited to the embodiments described below. In the following description, unless it is apparent from the context that it has another meaning, "/" means "or".

### (System Configuration)

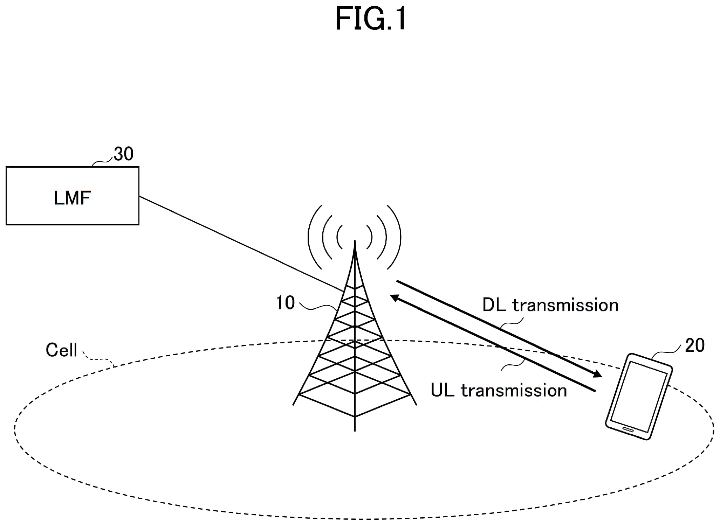

FIG. 1 is a diagram for explaining a radio communication system according to an embodiment of the present invention. As shown in FIG. 1, the radio communication system according to the embodiment of the present invention includes a base station 10 and a terminal 20. The core network is provided with an LMF 30, and the LMF 30 is capable of communicating with the base station 10. Note that the LMF 30 may communicate with the base station 10 via an AMF. The LMF 30 is an example of a network apparatus (to be also referred to as a network node). The base station 10 is also an example of a network apparatus. The LMF 30 may be referred to as a management apparatus.

Although one base station 10 and one terminal 20 are illustrated in FIG. 1, this is merely an example, and there may be a plurality of each. For example, a plurality of base stations 10 that are destinations of reference signals transmitted by the terminal 20 may be provided. One, some, or all of the plurality of base stations 10 may be an aerial device (e.g., a satellite or a HAPS).

A transmission source or a transmission destination of a reference signal may be referred to as a TRP (transmission-reception point). The TRP may be referred to as a transmission point or as a reception point. The TRP may also be referred to as a base station.

The base station 10 is a communication apparatus that provides one or more cells and performs radio communication with the terminal 20. The physical resources of the radio signal are defined in the time domain and the frequency domain, the time domain may be defined by the number of OFDM symbols, and the frequency domain may be defined by the number of subcarriers or the number of resource blocks. In addition, a transmission time interval (TTI) in the time domain may be a slot, or a TTI may be a subframe. Note that the cell and the CC may be considered to be synonymous.

The base station 10 can perform carrier aggregation in which a plurality of cells (a plurality of CCs (component carriers)) are bundled to communicate with the terminal 20. In the carrier aggregation, one PCell (primary cell) and one or more SCells (secondary cells) are used.

The base station 10 transmits a synchronization signal, system information, and the like to the terminal 20. The synchronization signal is, for example, an NR-PSS and an NR-SSS. The system information is transmitted, for example, in the NR-PBCH or the PDSCH, and is also referred to as broadcast information. As illustrated in FIG. 1, the base station 10 transmits a control signal or data to the terminal 20 on a downlink (DL), and receives a control signal or data from the terminal 20 on an uplink (UL). Note that, although what is transmitted on a control channel such as a PUCCH or a PDCCH is referred to as a control signal and what is transmitted on a shared channel such as a PUSCH or a PDSCH is referred to as data, such a name is an example. Also, UCI (Uplink Control Information) is transmitted by the PUCCH or the PUSCH.

The terminal 20 is a communication apparatus having a radio communication function, such as a smartphone, a mobile phone, a tablet, a wearable terminal, and a communication module for M2M (Machine-to-Machine). As illustrated in FIG. 1, the terminal 20 receives a control signal or data from the base station 10 in the DL and transmits a control signal or data to the base station 10 in the UL, thereby using various communication services provided by the radio communication system. Note that the terminal 20 may be referred to as a UE, and the base station 10 may be referred to as a gNB.

The terminal 20 can perform carrier aggregation in which a plurality of cells (a plurality of component carriers (CCs)) are bundled to communicate with the base station 10. In the carrier aggregation, one PCell (primary cell) and one or more SCells (secondary cells) are used. Also, a PUCCH-SCell with PUCCH may be used.

The LMF 30 is a function (apparatus) that performs communication control related to a location information service defined in 5GC. The LMF 30 may be referred to as a location management server, a location management apparatus, or a management apparatus. The LMF 30 can receive measured results (phases, received powers, time differences, angles, etc.) of the reference signals from the terminal 20 or the base station 10, and calculate the position of the terminal 20. The LMF 30 may provide configuration information or control information related to positioning to the terminal 20 and the base station 10.

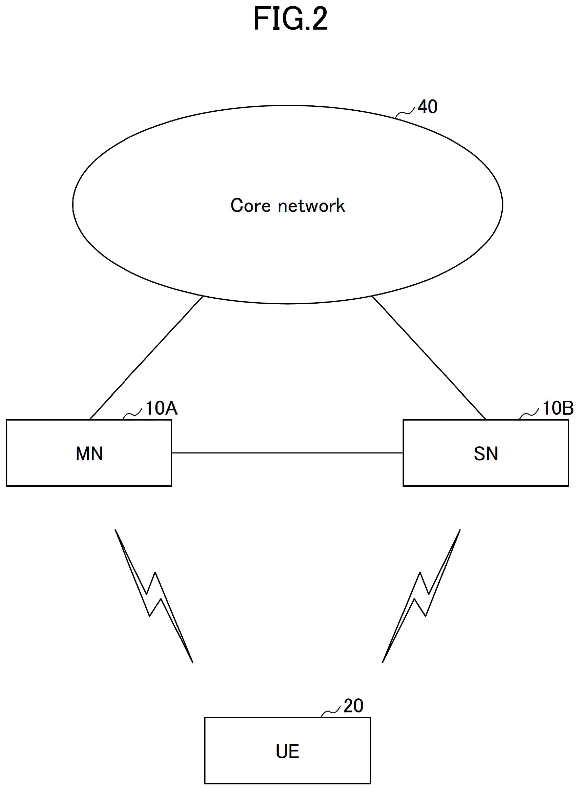

FIG. 2 illustrates a configuration example of a radio communication system in a case where dual connectivity (DC) is executed. As shown in FIG. 2, the base transceiver station 10A that serves as a master node (MN) and the base transceiver station 10B that serves as a secondary node (SN) are provided. The base stations 10A and 10B are connected to the core networks 40, respectively. The terminal 20 may communicate with both the base station 10A and the base station 10B.

A cell group provided by a base station 10A that is an MN is referred to as a master cell group (MCG), and a cell group provided by a base station 10B that is an SN is referred to as a secondary cell group (SCG). In DC, the MCG includes one PCell and one or more SCells, and the SCG includes one PSCell (Primary SCell) and one or more SCells.

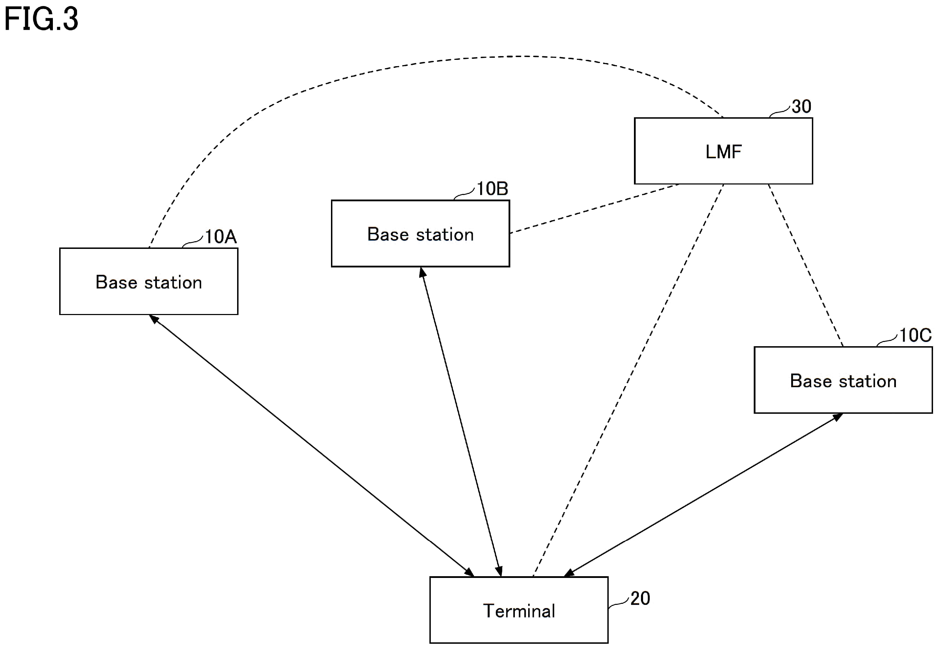

Processing operations in the present embodiment may be executed in the system configuration shown in FIG. 1, in the system configuration shown in FIG. 2, or in a system configuration other than these. FIG. 3 illustrates an example of a case where the terminal 20 performs positioning by receiving reference signals from a plurality of base stations 10A to 10C, or a case where positioning is performed by the terminal 20 transmitting reference signals to the plurality of base stations 10A to 10C. For example, the LMF 30 receives, from each base station, measurement results of SRS transmitted from the terminal 20 (such as received power, received phase, received angle, and reception time), and calculates a position of the terminal 20 from the measurement results.

### (Regarding the problems)

As described above, in Rel-18 NR positioning, frequency hopping of SRS for RedCap UEs is under discussion. When frequency hopping is applied to SRS for positioning and the like, it is expected that opportunities for collisions between SRS for positioning and another signal/channel will increase. However, in the conventional techniques, operations of the terminal and the NW (network) in the event of a collision between SRS for positioning and another signal/channel are not clearly defined. Therefore, operations in the event of a collision between SRS for positioning and another signal/channel may not be performed appropriately, and as a result, positioning may not be performed appropriately.

In view of the above, in the present embodiment (in particular, Embodiments 1 and 2), operations in the event of a collision between an SRS other than SRS for positioning and SRS for positioning are clarified. Since an SRS other than SRS for positioning is used in the terminal 20/base station 10 for channel estimation and the like for MIMO transmission and reception, this SRS will hereinafter be referred to as SRS for MIMO.

SRS for positioning may be referred to as a positioning reference signal, and SRS for MIMO may be referred to as a measurement reference signal. However, the positioning reference signal is not limited to SRS for positioning, and the measurement reference signal is not limited to SRS for MIMO.

Further, in the present embodiment (in particular, Embodiment 3), a timeline for determining whether a collision occurs between SRS for positioning and another signal/channel, and operations before and after the collision, are clarified.

### (Outline of the embodiments)

Hereinafter, as embodiments for solving the above problems, Embodiments 1 to 3 will be described. Outlines of Embodiments 1 to 3 are as follows. Embodiments 1 to 3 can be implemented in arbitrary combination.

Embodiment 1: The terminal 20 assumes that SRS for MIMO transmitted instead of SRS for positioning is used for positioning.

Embodiment 2: The terminal 20 assumes that SRS for positioning transmitted instead of SRS for MIMO is used for measurement.

Embodiment 3: The terminal 20 determines that SRS for positioning and another signal/channel collide when the terminal 20 receives, from the NW, configuration information/indication information regarding transmission and reception of SRS for positioning and another signal/channel that satisfies specific conditions.

Hereinafter, each embodiment will be described in detail. Any two or more, or all, of Embodiments 1 to 3 can be implemented in combination. In the following description, the "NW" that is a destination to which the terminal 20 transmits (reports) information or a source from which information is transmitted to the terminal 20 is specifically the base station 10 or the LMF 30. Accordingly, "NW" below may be replaced with the base station 10 or the LMF 30.

### (Basic operation example)

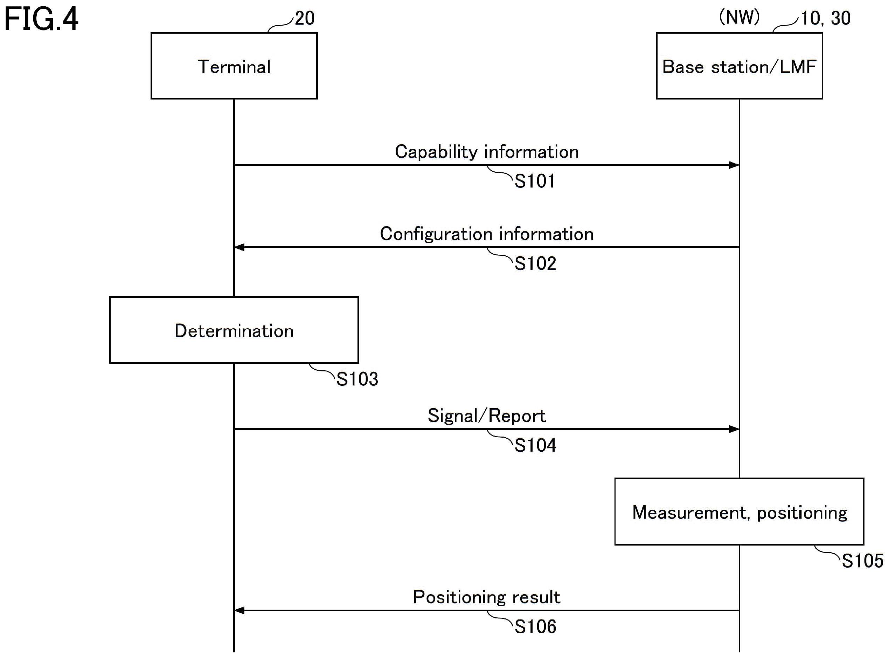

With reference to FIG. 4, a basic operation example common to Embodiments 1 to 3 will be described.

In S101, the terminal 20 transmits capability information (UE capability) to the NW. This capability information is information indicating, for example, whether or not the terminal 20 supports the operations of Embodiments 1/2/3.

In S102, the NW transmits configuration information to the terminal 20. This configuration information includes configuration information for SRS for positioning/SRS for MIMO.

The configuration information includes, for example, as information indicating resources (including sequences) for transmission of SRS for positioning/SRS for MIMO, one, some, or all of: time position, frequency position, time width (for example, the number of symbols), frequency width (for example, the number of resource blocks), a comb pattern, a period, information indicating a signal sequence (parameters for sequence generation and the like), and a frequency hopping pattern. Note that frequency hopping may be applied to both SRS for positioning and SRS for MIMO, may be applied to only one of them, or may not be applied to either.

The configuration information in S102 may further include configuration information for signals/channels (which may be UL or DL) other than "SRS for positioning/SRS for MIMO".

Further, in S102, or "after S102 and before S103", indication information for instructing transmission of SRS for positioning/SRS for MIMO may be transmitted from the NW to the terminal 20. The indication information is transmitted, for example, by DCI or MAC signaling. The indication information may be indication information that instructs transmission of specific SRS for positioning/SRS for MIMO out of a plurality of SRS for positioning (or a plurality of SRS for MIMO) configured for the terminal 20.

In S103, the terminal 20 determines whether or not a collision occurs. Details of a method for determining whether a collision occurs will be described in Embodiment 3.

In S104, transmission of a signal or report is performed based on a determination result in S103. For example, in S104, the signal/channel that is not dropped due to the collision is transmitted. Further, in S104, the terminal 20 may report to the NW that a collision will occur.

In S105, the NW receives SRS for positioning/SRS for MIMO from the terminal 20 and performs measurement. This measurement may be a measurement for positioning or a measurement not for positioning. When the measurement is a measurement for positioning, the NW further performs positioning calculation. Alternatively, the NW may notify the terminal 20 of a measurement result and the terminal 20 may perform positioning calculation.

When the positioning calculation for the terminal 20 is performed on the NW side in S105, in S106, a positioning result (location information of the terminal 20) may be notified from the NW to the terminal 20.

Hereinafter, each embodiment will be described.

### (Embodiment 1)

First, Embodiment 1 will be described. In Embodiment 1, the terminal 20 assumes that SRS for MIMO transmitted instead of SRS for positioning is used for positioning in the NW. More specific operations are as follows. In the following description, operation will be described as appropriate with reference to the step numbers in FIG. 4.

### <Operations of Embodiment 1>

In S103 of FIG. 4, when the terminal 20 determines that SRS for positioning and SRS for MIMO collide, the terminal 20 drops SRS for positioning and, in S104, transmits SRS for MIMO. The terminal 20 assumes that this SRS for MIMO is used for positioning and, for example, receives a positioning result from the NW in S106. As a specific method for collision determination, the method described in Embodiment 3 can be applied.

When the NW determines, for example, by using the same determination method as that used in the terminal 20, that SRS for positioning and SRS for MIMO collide, the NW assumes that SRS for MIMO will be received from the terminal 20 for positioning. When the NW receives SRS for MIMO from the terminal 20, it performs measurement and positioning calculation.

That the terminal 20 drops SRS for positioning means, for example, that the terminal 20 does not transmit the SRS for positioning at the time of the resource of the SRS for positioning.

For example, when the terminal 20 determines, based on configuration information or indication information, that a resource of SRS for positioning and a resource of SRS for MIMO overlap, the terminal 20 drops SRS for positioning and transmits SRS for MIMO in the resource instead of the SRS for positioning. The resource may be, for example, a resource (hop(s) (hopping resource(s))/symbol(s)) for a particular hop in SRS for MIMO (or SRS for positioning) in which frequency hopping is performed.

In this case, the terminal 20 may assume that a positioning result using the resource of the hop is notified from the NW. The terminal 20 may also report to the NW information (hop(s)/symbol(s)) indicating the hop corresponding to the SRS for positioning that collided.

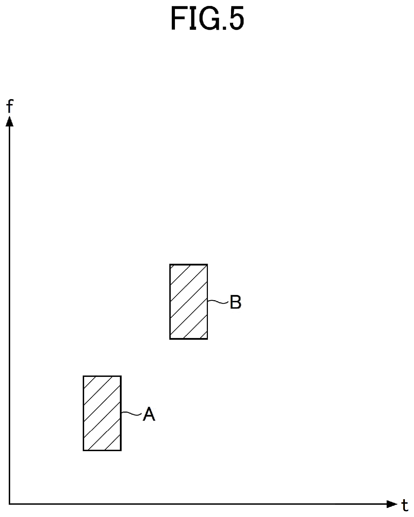

FIG. 5 illustrates resources A and B as examples of resources that are hopped, in SRS for MIMO (or SRS for positioning) with frequency hopping. For example, when SRS for MIMO and SRS for positioning collide at the hop of resource B and the terminal 20 drops SRS for positioning, the terminal 20 transmits SRS for MIMO at the hop of resource B and reports to the NW information indicating the hop of resource B (for example, a hop number, a symbol number).

### <Regarding support/not support for each positioning method>

For the terminal 20 or the NW, it may be configured, for each positioning method, whether or not the "operations of Embodiment 1" described above are supported. For example, the terminal 20 or the NW may support the "operations of Embodiment 1" for UL TDOA w/ frequency hopping (UL TDOA with frequency hopping), and may not support the "operations of Embodiment 1" for Multi-RTT or UL-AoA.

### <Regarding sequences>

Use sequences of SRS for positioning/SRS for MIMO may be determined (configured) in consideration of each other's sequences.

For example, the sequence of SRS for MIMO may be configured to be the same as the sequence of SRS for positioning that collides. This makes it possible to maintain continuity of signals and phases with SRS for positioning even if SRS for MIMO is applied to a resource (hop(s)/symbol(s)) that collides with SRS for positioning. As a result, positioning using SRS for MIMO can be performed appropriately.

More specifically, for example, in configuration information that the NW configures to the terminal 20, the sequence of SRS for MIMO and the sequence of SRS for positioning may be the same.

Further, the NW may configure a plurality of sequences for each of SRS for MIMO and SRS for positioning to the terminal 20, and the terminal 20 that transmits SRS for positioning may select and use, as a sequence of SRS for MIMO to be transmitted when a collision occurs, the same sequence as the sequence of SRS for positioning.

### <Regarding resources used for positioning>

In SRS for MIMO to which frequency hopping is applied, only some of a plurality of resources obtained by hopping (only a part of hops among a plurality of hops) may be used for positioning using SRS for MIMO. For example, in a case where two hops as shown in FIG. 5 are repeated in the time domain, only the hop indicated by B may be usable for positioning by SRS for MIMO, and the hop indicated by A may be unusable for positioning by SRS for MIMO.

Which hop in SRS for MIMO can be used for positioning by SRS for MIMO may be notified from the NW to the terminal 20.

### <Regarding conditions>

The terminal 20 may assume that positioning using SRS for MIMO can be performed when SRS for MIMO that satisfies specific conditions is configured (or indicated) for the terminal 20.

Examples of specific conditions include a condition regarding a hopping pattern, a condition regarding a gap size, a condition regarding frequency mapping, and a condition regarding an overlap size.

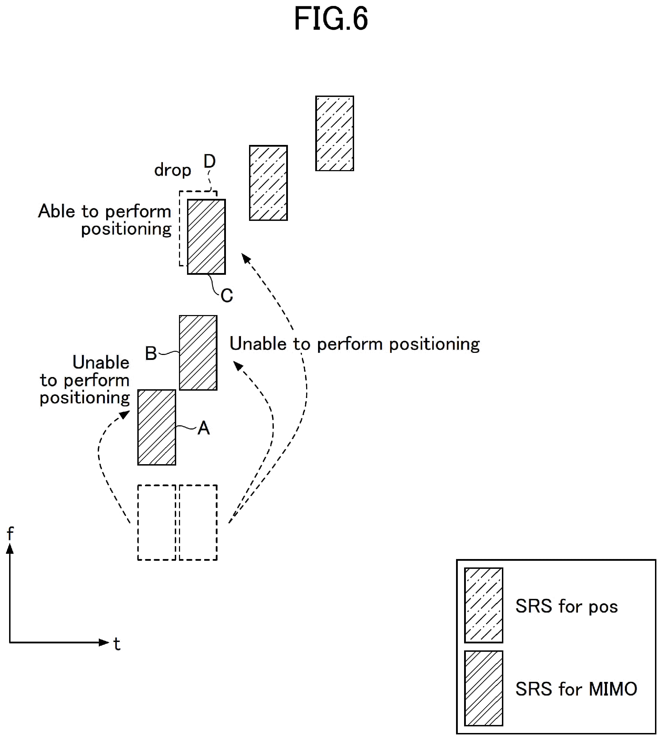

The specific conditions may be specified in a technical specification, or may be configured/indicated from the NW to the terminal 20 by RRC/MAC/DCI or the like. Specific examples of the specific conditions will be described with reference to FIGS. 6 to 9.

### Example 1 (hopping pattern):

FIG. 6 illustrates an example related to conditions regarding a hopping pattern. In the example of FIG. 6, it is assumed that there are a pattern of hop A → hop B and a pattern of hop A → hop C for a frequency hopping pattern of SRS for MIMO.

When the pattern of hop A → hop B is configured for the terminal 20, even if SRS for MIMO at hop B collides with SRS for positioning indicated by D and the SRS for positioning is dropped, the terminal 20 assumes that SRS for MIMO at hop B is not used for positioning. This is because the frequency position of SRS for positioning and the frequency position of hop B are far apart (for example, apart by greater than or equal to a threshold), and thus frequency continuity in positioning cannot be maintained.

On the other hand, when the pattern of hop A → hop C is configured for the terminal 20, SRS for MIMO at hop C and SRS for positioning indicated by D collide, and the SRS for positioning is dropped. The terminal 20 assumes that positioning is performed by SRS for MIMO transmitted at hop C. On the NW side, whether to perform positioning by SRS for MIMO is determined based on the above condition.

Note that the two dotted rectangles shown at the bottom of FIG. 6 indicate a case where frequency hopping is not configured or activated for SRS for MIMO. Even when frequency hopping is not configured or activated for SRS for MIMO, the same operation as the above is performed. For example, when SRS for MIMO is located at the positions of the two dotted rectangles at the bottom of FIG. 6, positioning by SRS for MIMO is not possible.

### Example 2 (gap size):

In the NW, in order to perform positioning (including measurements for positioning) by an SRS1 and another SRS2 having different frequency positions, a gap with a predetermined time length or longer is required between SRS1 and SRS2.

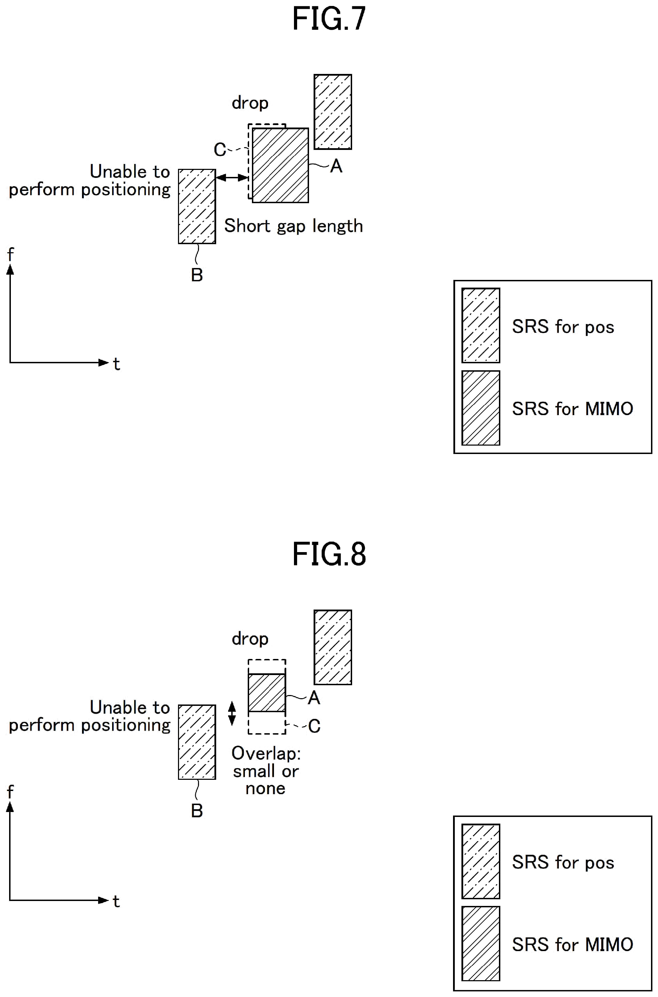

In the example shown in FIG. 7, since SRS for MIMO indicated by A and SRS for positioning indicated by C collide, the terminal 20 drops the SRS for positioning indicated by C and transmits the SRS for MIMO indicated by A. In FIG. 7, A is shown shifted to the right from its actual position for ease of illustration.

However, the terminal 20 determines that a gap length between SRS for positioning indicated by B and SRS for MIMO indicated by A is small (for example, smaller than a threshold), and assumes that positioning by SRS for MIMO indicated by A is not performed.

### Example 3 (frequency mapping/overlap size):

In the NW, in order to perform positioning (including measurements for positioning) by an SRS1 and another SRS2 having different frequency positions, a frequency overlap with a predetermined width is required between SRS1 and SRS2.

In the example shown in FIG. 8, SRS for MIMO indicated by A and SRS for positioning indicated by C collide, and the terminal 20 drops C. The terminal 20 transmits SRS for MIMO indicated by A.

However, since a frequency overlap width between B and A is small (for example, smaller than a threshold), the terminal 20 assumes that positioning by SRS for MIMO indicated by A is not performed.

### Example 4 (frequency mapping/overlap size):

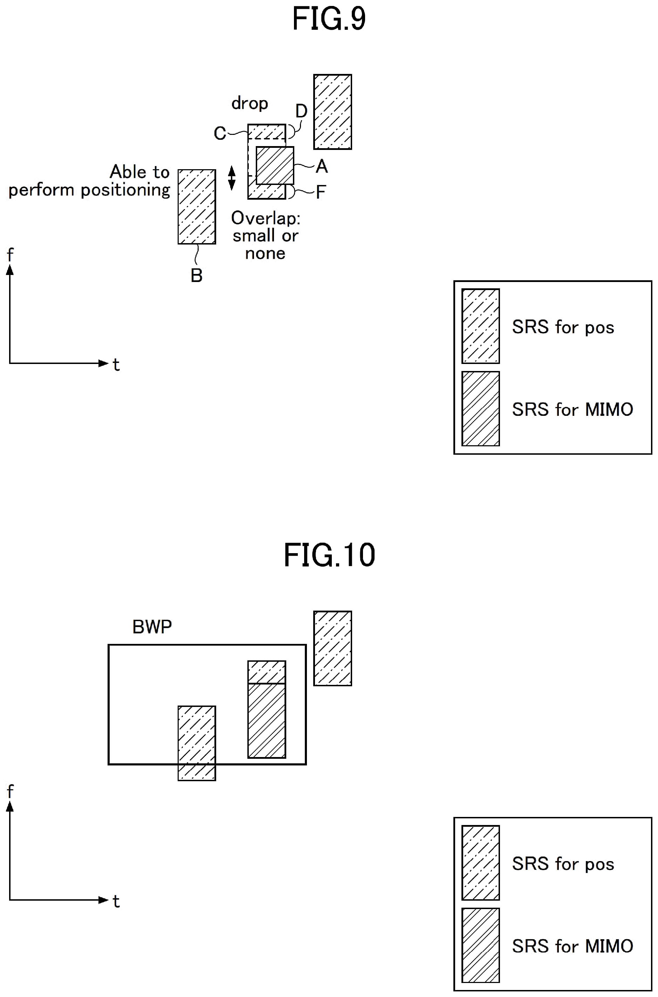

In the example shown in FIG. 9, SRS for MIMO indicated by A and SRS for positioning indicated by C collide, but the terminal 20 drops only a portion of A in C, and transmits SRS for MIMO indicated by A and also transmits portions of SRS for positioning indicated by D and F.

The terminal 20 determines that a frequency overlap width between SRS for positioning indicated by B and the signal indicated by "F, A, D" is sufficiently large (for example, greater than a threshold), and assumes that positioning is performed by the signal indicated by "F, A, D". Note that, in the example of FIG. 9, a frequency overlap width between SRS for positioning indicated by B and only the signal indicated by A is small.

That is, among resources (hop(s)) of SRS for positioning, only RB(s)/symbol(s) of an overlapping portion between SRS for positioning and SRS for MIMO may be dropped, and the remaining RB(s)/symbol(s) may continue to be transmitted. In this case, the NW may perform positioning by combining SRS for positioning and SRS for MIMO within the hop(s).

### <Effects of Embodiment 1>

According to Embodiment 1, even when SRS for positioning collides with SRS for MIMO, positioning can be continued.

### (Embodiment 2)

Next, Embodiment 2 will be described. In Embodiment 2, the terminal 20 assumes that SRS for positioning transmitted instead of SRS for MIMO is used for measurement. Here, measurement is assumed to be a measurement other than a measurement for positioning. Specifically, for example, the measurement here is a measurement normally performed by SRS for MIMO.

More specific operations are as follows. In the following description, operation will be described as appropriate with reference to the step numbers in FIG. 4.

### <Operations of Embodiment 2>

In S103 of FIG. 4, when the terminal 20 determines that SRS for positioning and SRS for MIMO collide, the terminal 20 drops SRS for MIMO and, in S104, transmits SRS for positioning. The terminal 20 assumes that this SRS for positioning is used for measurement. As a specific method for collision determination, the method described in Embodiment 3 can be applied.

When the NW determines, for example, by using the same determination method as that used in the terminal 20, that SRS for positioning and SRS for MIMO collide, the NW assumes that SRS for positioning will be received from the terminal 20 for measurement. When the NW receives SRS for positioning from the terminal 20, it performs measurement.

That the terminal 20 drops SRS for MIMO means, for example, that the terminal 20 does not transmit the SRS for MIMO at the time of the resource of the SRS for MIMO.

For example, when the terminal 20 determines, based on configuration information or indication information, that a resource of SRS for positioning and a resource of SRS for MIMO overlap, the terminal 20 drops SRS for MIMO and transmits SRS for positioning in the resource instead of the SRS for MIMO. The resource may be, for example, a resource (hop(s) (hopping resource(s))/symbol(s)) for a particular hop in SRS for MIMO (or SRS for positioning) in which frequency hopping is performed.

In this case, the terminal 20 may report to the NW information (hop(s)/symbol(s)) of a hop corresponding to the SRS for MIMO (or SRS for positioning) that collided.

Here again, description will be given with reference to FIG. 5. Resources A and B are illustrated as examples of resources that are hopped in SRS for MIMO (or SRS for positioning) with frequency hopping. For example, when a hop of resource B collides with SRS for positioning and the terminal 20 drops SRS for MIMO of resource B, the terminal 20 transmits SRS for positioning at the hop of resource B and reports to the NW information indicating the hop of resource B (for example, a hop number, a symbol number).

### <Regarding support/not support for each measurement>

For the terminal 20 or the NW, it may be configured, for each type of measurement, whether or not the "operations of Embodiment 2" described above are supported. For example, the terminal 20 or the NW may support the "operations of Embodiment 2" for CSI acquisition (acquisition of channel state information), and may not support the "operations of Embodiment 2" for beam management.

### <Regarding sequences>

Use sequences of SRS for positioning/SRS for MIMO may be determined (configured) in consideration of each other's sequences.

For example, the sequence of SRS for positioning may be configured to be the same as the sequence of SRS for MIMO that collides. This makes it possible to maintain continuity of signals with SRS for MIMO even if SRS for positioning is applied to a resource (hop(s)/symbol(s)) that collides with SRS for MIMO.

More specifically, for example, in configuration information that the NW configures to the terminal 20, the sequence of SRS for MIMO and the sequence of SRS for positioning may be the same.

Further, the NW may configure a plurality of sequences for each of SRS for MIMO and SRS for positioning to the terminal 20, and the terminal 20 that transmits SRS for positioning upon a collision may select and use, as a sequence of SRS for positioning, the same sequence as the sequence of SRS for MIMO.

### <Regarding resources used for positioning>

In SRS for positioning to which frequency hopping is applied, only some of a plurality of resources obtained by hopping (only a part of hops among a plurality of hops) may be used for measurement by SRS for positioning. For example, assuming that FIG. 5 illustrates SRS for positioning, in a case where the two hops shown in FIG. 5 are repeated in the time domain, only the hop indicated by B may be usable for measurement by SRS for positioning, and the hop indicated by A may be unusable for measurement by SRS for positioning.

Which hop in SRS for positioning can be used for measurement by SRS for positioning may be notified from the NW to the terminal 20.

### <Regarding conditions>

For an assumption on whether measurement can be performed, the same conditions as those described in Embodiment 1 may be applied. However, in Embodiment 2, SRS for positioning in Embodiment 1 is regarded as SRS for MIMO, and SRS for MIMO in Embodiment 1 is regarded as SRS for positioning.

### <Effects of Embodiment 2>

According to Embodiment 2, even when SRS for MIMO collides with SRS for positioning, measurement can be continued.

### (Regarding selection of Embodiment 1/Embodiment 2)

When SRS for MIMO and SRS for positioning collide, priority as to which one is to be dropped may be configured/indicated from the NW to the terminal 20.

For example, when the NW configures/indicates to the terminal 20 information indicating that "when SRS for MIMO and SRS for positioning collide, SRS for positioning is to be dropped", the terminal 20, when SRS for MIMO and SRS for positioning collide, drops SRS for positioning and transmits SRS for MIMO. In this case, the terminal 20 assumes that positioning by SRS for MIMO is performed.

### (Embodiment 3)

Next, Embodiment 3 will be described. In Embodiment 3, examples of conditions (determination) regarding "collision" will be described.

Targets of collision (two signals (or channels) between which a collision may occur) in Embodiment 3 are SRS for positioning and another signal/channel. SRS for MIMO described in Embodiments 1 and 2 is an example of "another signal/channel". "Another signal/channel" may be UL signal/channel or DL signal/channel. Examples of "another signal/channel" include, in addition to SRS for MIMO, reference signals other than "SRS for MIMO/SRS for positioning", SR, PUSCH, PUCCH, PDCCH, PDSCH, and sidelink signals/channels.

### <Basic example>

In Embodiment 3, when the terminal 20 determines that "configuration information/indication information regarding transmission and reception of SRS for positioning and another signal/channel" received from the NW satisfies specific conditions, the terminal 20 determines that SRS for positioning and the other signal/channel collide.

Examples of the above conditions include the following (1) and (2).
(1) A resource (transmission resource) of SRS for positioning and a resource (transmission or reception resource) of another signal/channel overlap in a frequency direction within the same time slot.

"Overlap in a frequency direction" may be any of: a case where a part of a frequency resource of SRS for positioning and a part of a frequency resource of another signal/channel overlap; a case where all of a frequency resource of SRS for positioning and a part of a frequency resource of another signal/channel overlap; a case where a part of a frequency resource of SRS for positioning and all of a frequency resource of another signal/channel overlap; and a case where all of a frequency resource of SRS for positioning and all of a frequency resource of another signal/channel overlap.

However, when a part of a frequency resource of SRS for positioning and a part of a frequency resource of another signal/channel overlap and a frequency width of the part is smaller than a threshold, it may be determined that no collision occurs.

(2) A resource of SRS for positioning and a resource of another signal/channel are in different BWPs within the same time slot.

A plurality of BWPs can be configured for the terminal 20, but only one BWP is active at a given time. Therefore, as described above, when a resource of SRS for positioning and a resource of another signal/channel are in different BWPs within the same time slot, the terminal 20 determines that SRS for positioning and the other signal/channel collide.

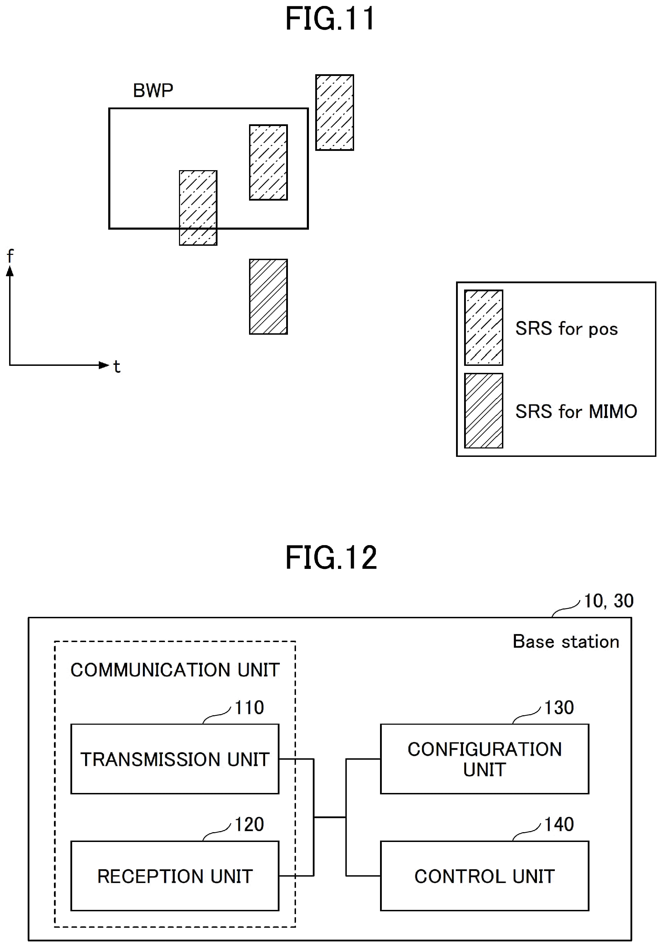

FIGS. 10 and 11 illustrate examples of cases where a collision occurs. FIGS. 10 and 11 illustrate, as an example, a case where the other signal/channel is SRS for MIMO. FIG. 10 illustrates the case of the above (1), and FIG. 11 illustrates the case of the above (2).

### <Variation>

Even when transmission and reception of SRS for positioning and another signal/channel are not explicitly configured/indicated from the NW, the terminal 20 may determine that a collision occurs between SRS for positioning and another signal/channel based on a timer set in the past, an event trigger, or a transmission request from the terminal 20 and the like. For example, when a configuration of SRS for positioning is made for the terminal 20 and the terminal 20 periodically transmits (or receives) a signal/channel based on a timer, if the terminal 20 determines that SRS for positioning and the signal/channel satisfy the above conditions, the terminal 20 determines that a collision occurs.

Further, in the above case (2), instead of a BWP, a frequency width in which transmission and reception of a signal/channel can generally be performed may be used. For example, when the frequency width is X, the condition (2) is "a resource of SRS for positioning and a resource of another signal/channel are in the same time slot, the resource of SRS for positioning is within a frequency width X, and the resource of the other signal/channel is outside the frequency width X".

Further, the same time slot in each of the above conditions may be a time including a switching time. Also, instead of "time slot" in each of the above conditions, "N × time slot" (N>1), "X symbols" (X is an integer), or the like may be used.

### <Report to NW>

When the terminal 20 determines, based on configuration information/indication information received from the NW (or based on a trigger other than configuration information/indication information received from the NW), that a collision occurs between SRS for positioning and another signal/channel, the terminal 20 may report to the NW information indicating that a collision occurs.

The terminal 20 may return the above report as an ack (or nack) to an SRS for positioning transmission indication from the NW, or may transmit the above report by including it in a measurement report.

Further, the terminal 20 may report to the NW information on a resource that could not be transmitted due to a collision (for example, an ID of hop(s)/symbol(s)). For example, in the example of Embodiment 1, when the terminal 20 determines that a collision occurs between SRS for positioning and SRS for MIMO and drops SRS for positioning, the terminal 20 reports to the NW information on the dropped resource.

Further, when the terminal 20 does not report to the NW about a collision for a certain period of time, the NW may assume that a collision has occurred in some resource (for example, hop(s)/symbol(s)).

### <Regarding retransmission>

After dropping SRS for positioning due to occurrence of a collision, the terminal 20 may perform operations related to retransmission of SRS for positioning as shown in the following Options 1 to 3.

### Option 1:

The terminal 20 attempts retransmission of SRS for positioning every X seconds (X≥0). X may be an existing timer or may be a new timer.

### Option 2:

The terminal 20 may attempt retransmission of SRS for positioning when the terminal 20 determines, based on a configuration from the NW or based on a measurement result at the terminal 20, that SRS for positioning does not collide with another signal/channel. Option 1 and Option 2 may be combined.

### Option 3:

The terminal 20 completely drops SRS for positioning and does not retransmit it.

### <Effects of Embodiment 3>

According to Embodiment 3, the terminal 20 can clearly determine occurrence of a collision, and operations before and after the collision become clear.

### (Other examples)

Examples applicable to any of Embodiments 1 to 3 will be described below.

"PRS (Positioning Reference Signal)" may be read as "DL-PRS" or "UL-PRS (e.g. SRS for positioning, SRS)", or the like.

"SRS" may be read as "SRS for MIMO", "SRS for positioning", and the like. "PFL" may be read as "CC", and the like. "NW" may be read as "gNB", "TRP", "LMF", and the like.

"QCL" may be read as "TCI state", "spatial relation info", and the like. "Configured/indicated from the NW" may be read as "configured/activated/indicated from the NW by RRC/MAC-CE/DCI".

### (Apparatus Configuration)

Next, a functional configuration example of the NW (that is, the base station 10/the LMF 30) and the terminal 20 that execute the processes and operations described above will be described. The base station 10/the LMF 30 and the terminal 20 include functions for implementing all of the above embodiments. However, each of the base station 10, the LMF 30, and the terminal 20 may include only functions of any one of the embodiments among all of the embodiments.

### <Base Station 10>

FIG. 12 is a diagram illustrating an example of a functional configuration of the base station 10. As illustrated in FIG. 12, the base station 10 includes a transmission unit 110, a reception unit 120, a configuration unit 130, and a control unit 140. The functional configuration illustrated in FIG. 12 is merely an example. The functional division and the name of the functional unit may be any division and name as long as the operation according to the embodiment of the present invention can be executed. The transmission unit 110 and the reception unit 120 may be collectively referred to as a communication unit. The transmission unit 110 and the reception unit 120 may also be referred to as a transmitter and a receiver, respectively.

The transmission unit 110 includes a function of generating a signal to be transmitted to the terminal 20 side and transmitting the signal by radio. The transmission unit 110 may also transmit signals to a network apparatus, such as the LMF 30. The reception unit 120 includes a function of receiving various signals transmitted from the terminal 20 and acquiring, for example, information of a higher layer from the received signal. The reception unit 120 may receive a signal from a network apparatus such as the LMF 30. The transmission unit 110 has a function of transmitting the NR-PSS, the NR-SSS, the NR-PBCH, the DL/UL control signal, the DCI by the PDCCH, the data by the PDSCH, and the like to the terminal 20.

The configuration unit 130 stores configuration information configured in advance and various types of configuration information to be transmitted to the terminal 20 in a storage device included in the configuration unit 130, and reads the configuration information from the storage device as necessary.

The control unit 140 includes a measurement function. The functional unit related to signal transmission in the control unit 140 may be included in the transmission unit 110, and the functional unit related to signal reception in the control unit 140 may be included in the reception unit 120.

The LMF 30 may also have the configuration shown in FIG. 12. In a case where the configuration illustrated in FIG. 12 is the LMF, the transmission unit 110 transmits a signal to another network apparatus (including a base station), and the reception unit 120 receives a signal from another network apparatus (including a base station).

### <Terminal 20>

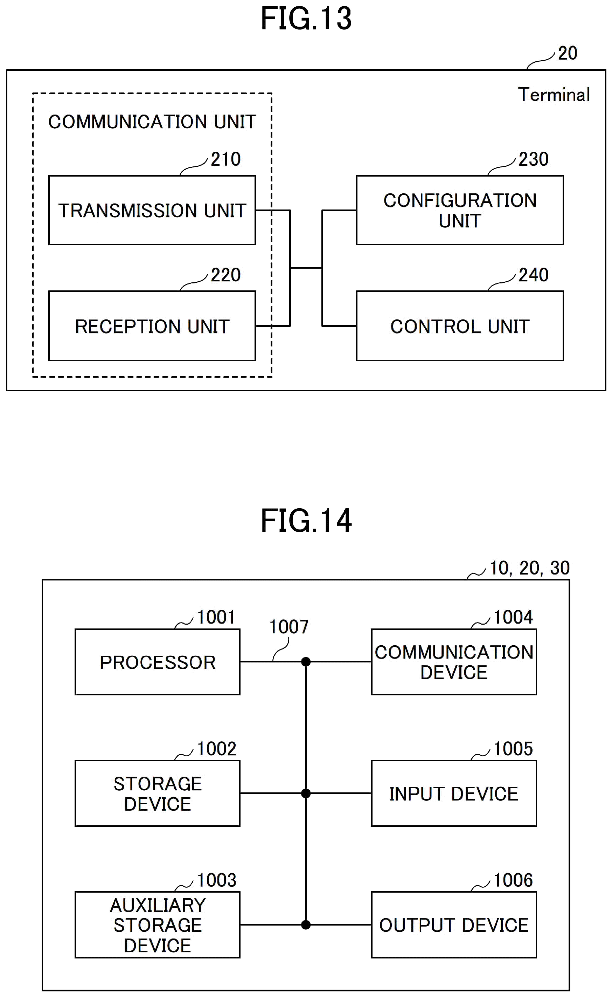

FIG. 13 is a diagram illustrating an example of a functional configuration of the terminal 20. As illustrated in FIG. 13, the terminal 20 includes a transmission unit 210, a reception unit 220, a configuration unit 230, and a control unit 240. The functional configuration illustrated in FIG. 13 is merely an example. The functional division and the name of the functional unit may be any division and name as long as the operation according to the embodiment of the present invention can be executed. The transmission unit 210 and the reception unit 220 may be collectively referred to as a communication unit.

The transmission unit 210 generates a transmission signal from transmission data and transmits the transmission signal by radio. The reception unit 220 receives various signals by radio and acquires a signal of a higher layer from the received signal of the physical layer. The reception unit 220 has a function of receiving the NR-PSS, the NR-SSS, the NR-PBCH, the DL/UL/SL control signal, the DCI by the PDCCH, the data by the PDSCH, and the like transmitted from the base station 10. In addition, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to the other terminals 20 as D2D communication, and the reception unit 220 may receive the PSCCH, the PSSCH, the PSDCH, the PSBCH, or the like from the other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information that is configured in advance.

The control unit 240 controls the terminal 20. The control unit 240 includes functions for measurement and positioning. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

In the present specification, at least the matters described in Supplementary Note 1 and Supplementary Note 2 below are disclosed.

### <Supplementary Note 1>

### [Clause 1]

A terminal including:
a transmission unit configured, when a positioning reference signal and a measurement reference signal collide, to drop the positioning reference signal and transmit the measurement reference signal to a network; and
a control unit configured to assume that positioning is performed by the measurement reference signal.

### [Clause 2]

The terminal as described in clause 1, wherein the transmission unit reports to the network information indicating a hop in frequency hopping corresponding to a resource of the dropped positioning reference signal.

### [Clause 3]

The terminal as described in clause 1, wherein the control unit assumes that positioning is performed by the measurement reference signal when the positioning reference signal and the measurement reference signal satisfy a specific condition.

### [Clause 4]

A base station including:
a reception unit configured to receive, from a terminal, a measurement reference signal transmitted from the terminal when a positioning reference signal and the measurement reference signal collide; and
a control unit configured to perform a measurement for positioning by the measurement reference signal.

### [Clause 5]

A terminal including:
a transmission unit configured, when a positioning reference signal and a measurement reference signal collide, to drop the measurement reference signal and transmit the positioning reference signal to a network; and
a control unit configured to assume that a measurement that is not for positioning is performed by the positioning reference signal.

### [Clause 6]

A communication method executed by a terminal, the communication method including:
when a positioning reference signal and a measurement reference signal collide, dropping the positioning reference signal and transmitting the measurement reference signal to a network; and
assuming that positioning is performed by the measurement reference signal.

According to any of the configurations described in the above items, a technique is provided that makes it possible for a terminal or an NW to appropriately perform operations when a collision occurs between SRS for positioning and another signal/channel. According to clause 2, the NW can grasp in which hop a drop has occurred. According to clause 3, it is possible, for example, to assume that positioning is not performed in a situation unsuitable for positioning.

### <Supplementary Note 2>

### [Clause 1]

A terminal including:
a control unit configured, when a resource of a positioning reference signal and a resource of a signal or channel other than the positioning reference signal are within a same time width and satisfy a specific condition in a frequency direction, to determine that the positioning reference signal and the signal or the channel collide; and
a transmission unit configured to report to a network information indicating that a collision occurs.

### [Clause 2]

The terminal as described in clause 1, wherein the specific condition is that there is an overlap in the frequency direction between the resource of the positioning reference signal and the resource of the signal or the channel, or that the resource of the positioning reference signal and the resource of the signal or the channel are in different BWPs.

### [Clause 3]

The terminal as described in clause 1, wherein the transmission unit reports to the network, as the information indicating that a collision occurs, information indicating a hop in frequency hopping corresponding to a resource that cannot be transmitted due to the collision.

### [Clause 4]

The terminal as described in clause 1, wherein, when the positioning reference signal is dropped due to the collision, the transmission unit retransmits the positioning reference signal at predetermined time intervals, or when it is determined that a collision with another signal or channel does not occur.

### [Clause 5]

A communication method executed by a terminal, the communication method including:
when a resource of a positioning reference signal and a resource of a signal or channel other than the positioning reference signal are within a same time width and satisfy a specific condition in a frequency direction, determining that the positioning reference signal and the signal or the channel collide; and
reporting to a network information indicating that a collision occurs.

According to any of the configurations described in the above clauses, a technique is provided that makes it possible for a terminal or an NW to appropriately perform operations when a collision occurs between SRS for positioning and another signal/channel. According to clause 2, it is possible to appropriately determine whether a collision occurs. According to clause 3, the NW can grasp in which hop a collision has occurred. According to clause 4, retransmission of a positioning reference signal can be appropriately performed.

### (Hardware Configuration)

The block diagrams (FIGs. 12 and 13) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the LMF 30, the terminal 20 and the like in one embodiment of this disclosure may function as a computer for performing the processing of a radio communication method of this disclosure. FIG. 14 is a diagram illustrating an example of a hardware configuration of the base station 10 and the terminal 20 and the LMF 30 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 and the LMF 30 may be configured to include one or a plurality of apparatuses illustrated in the drawings, or may be configured not to include a part of the apparatuses.

Each function of the base station 10, the LMF 30 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 may be attained by a control program that is stored in the storage device 1002 and is operated by the processor 1001. Also, for example, the control unit 240 of the terminal 20 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 and the LMF 30 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

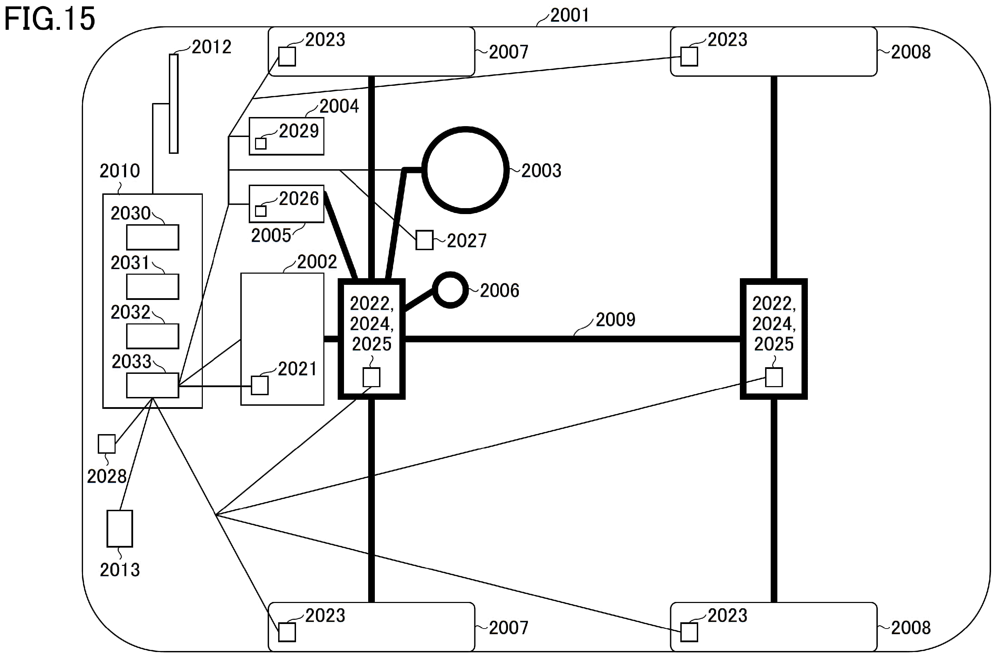

The terminal 20 or the base station 10 or the LMF 30 may be provided in a vehicle. FIG. 15 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The terminal 20 or the base station 10 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001. When the terminal 20, the base station 10, or the LMF 30 is included in the communication module 2013, the communication module 2013 can execute the operations described in Embodiments 1 to 3.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 and the LMF 30 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multi-copters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure. Description of Symbols

10 base station
110 transmission unit
120 reception unit
130 configuration unit
140 control unit
20 terminal
210 transmission unit
220 reception unit
230 configuration unit
240 control unit
30 LMF
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a transmission unit configured, when a positioning reference signal and a measurement reference signal collide, to drop the positioning reference signal and transmit the measurement reference signal to a network; and
a control unit configured to assume that positioning is performed by the measurement reference signal.

2. The terminal as claimed in claim 1, wherein the transmission unit reports to the network information indicating a hop in frequency hopping corresponding to a resource of the dropped positioning reference signal.

3. The terminal as claimed in claim 1, wherein the control unit assumes that positioning is performed by the measurement reference signal when the positioning reference signal and the measurement reference signal satisfy a specific condition.

4. A base station comprising:
a reception unit configured to receive, from a terminal, a measurement reference signal transmitted from the terminal when a positioning reference signal and the measurement reference signal collide; and
a control unit configured to perform a measurement for positioning by the measurement reference signal.

5. A terminal comprising:
a transmission unit configured, when a positioning reference signal and a measurement reference signal collide, to drop the measurement reference signal and transmit the positioning reference signal to a network; and
a control unit configured to assume that a measurement that is not for positioning is performed by the positioning reference signal.

6. A communication method executed by a terminal, the communication method comprising:
when a positioning reference signal and a measurement reference signal collide, dropping the positioning reference signal and transmitting the measurement reference signal to a network; and
assuming that positioning is performed by the measurement reference signal.
